# EUROPÄISCHE PATENTANMELDUNG

(11) **EP 3 170 598 A1**
(43) Veröffentlichungstag der Anmeldung: **24.05.2017**
(21) Anmeldenummer: 16189613.9
(22) Anmeldetag: 20.09.2016
(51) Int. Cl.: B23C 5/08, B23C 5/10, B23B 31/11

(54) **FRÄSERKOPFEINHEIT, FRÄSERSCHAFT UND AUFSCHRAUBFRÄSER**

(30) Priorität: 20.11.2015 DE 202015106360 U
(71) Anmelder: Simtek AG, 72116 Mössingen (DE)
(72) Erfinder: Seifermann, Norbert, 72411 Bodelshausen (DE)
(74) Vertreter: Jakelski & Althoff Patentanwälte PartG mbB

(57) **Zusammenfassung**

Eine Fräserkopfeinheit (1) weist einen Fräserkopf und ein daran angepasstes Stahlteil (12) auf. Das Stahlteil weist eine Bohrung (13) und ein in der Bohrung befindliches Innengewinde (14) auf. Ein Fräserschaft (2), weist ein Außengewinde (21), eine stirnseitige Fläche (22) sowie einen zwischen dieser Fläche (21) und dem Außengewinde (21) angeordneten zylinderförmigen Bereich (222) auf, welcher der Führung bei einem Zusammenbau des Fräserschafts (2) und der Fräserkopfeinheit (1) dient. Durch den Zusammenbau wird ein Aufschraubfräser erhalten, der die Fräserkopfeinheit (1) und den Fräserschaft (2) aufweist.

## Beschreibung

Die Erfindung betrifft eine Fräserkopfeinheit, einen Fräserschaft und einen Aufschraubfräser nach der Gattung der unabhängigen Ansprüche.

### Stand der Technik

Die heute verwendeten Aufschraubfräser bestehen aus einem Schaft und einem Fräserkopf, wobei beide Teile im Allgemeinen aus sogenanntem Hartmetall hergestellt sind. Unter Hartmetall wird dabei ein gesintertes Carbidhartmetall verstanden, welches aus 90 - 94 % Wolframcarbid und 6 - 10 % Cobalt besteht. Das Wolframcarbid stellt die Verstärkungsphase dar und das Cobalt dient als Matrix, Bindemittel bzw. als Zähigkeitskomponente. Hartmetalle zeichnen sich durch eine sehr hohe Härte und Verschleißfestigkeit aus. Insbesondere besitzen Hartmetalle eine hohe Wärmehärte, was bedeutet, dass sie bis zu Einsatztemperaturen von ca. 600 °C höhere Festigkeitswerte bei gleichzeitig geringerem Abrasivverschleiß aufweisen als andere Legierungen. Bei den heute verwendeten Aufschraubfräsern befindet sich das Außengewinde mit Welle, welche Teil der Passung ist, am Fräserkopf und es soll über ein Innengewinde und eine Bohrung, welche auch Teil der Passung sind, am Schaft montiert werden. Es ist nicht bzw. nicht ohne erheblichen Aufwand möglich das Innengewinde und die Bohrung im Hartmetall herzustellen. Daher ist es notwendig auf den Hartmetallschaft einen Stahlteil aufzulöten, welches ein leichter zu bearbeitendes Material ist. In diesem Stahlteil werden das Innengewinde und die Passbohrung zur Aufnahme des Fräserkopfes gefertigt. Alternativ kann der Schaft auch komplett aus Stahl bestehen, was allerdings den Nachteil hat, dass Stahl eine weitaus schlechtere Schwingungsdämpfung hat als Hartmetall. Weitere Nachteile bei den heute verwendeten Aufschraubfräsern sind, dass bei dem oben beschriebenen Aufbau jeder Fräserkopf einzeln geschliffen werden muss und dass das Stahlteil am Schaft angelötet werden muss. Letzteres ist im Hinblick auf einen Werkzeugbruch problematisch, da bei einem Abbrechen des Fräserkopfes das Stück mit dem Außengewinde gegebenenfalls im am Schaft befestigten Stahlteil verbleiben und unter Umständen nicht mehr zu entfernen sein könnte. In einem solchen Fall müsste nicht nur der Fräserkopf, sondern auch der gesamte Schaft kostspielig ausgetauscht bzw. repariert werden. Es ist daher Aufgabe der Erfindung einen Aufschraubfräser bereitzustellen, bei welchem auf die Herstellung eines Innengewindes im Hartmetallschaft verzichtet werden kann und bei welchem im Falle eines Werkzeugbruchs nur ein Ersetzen des Fräserkopfes und nicht des Fräserschaftes erforderlich ist.

### Offenbarung der Erfindung

Die Aufgabe der Erfindung wird in einem ersten Aspekt durch die erfindungsgemäße Fräserkopfeinheit gelöst. Die erfindungsgemäße Fräserkopfeinheit weist einen Fräserkopf und ein daran angepasstes Stahlteil auf, wobei das Stahlteil eine Bohrung und ein in der Bohrung befindliches Innengewinde aufweist. Ein Vorteil dieser Vorrichtung ist, dass nicht der gesamte Fräserkopf aus teuerem Hartmetall gefertigt wird, sondern ein Teil aus einem günstigeren Stahl hergestellt wird.

Bevorzugter Weise weist der Fräserkopf einen Lötbereich auf, welcher zum Anlöten des Stahlteils eingerichtet ist. Durch das Vorhandensein eines speziellen Lötbereichs, kann das Stahlteil vorteilhafter Weise auf einfache Weise an den Fräserkopf angelötet werden.

Insbesondere ist der Lötbereich konusförmig ausgestaltet, so dass er vorteilhafter Weise besseren Halt bietet. Das Stahlteil kann allerdings auch mit einem scheibenförmigen Fräserkopf verbunden werden.

In einer besonders bevorzugten Ausführungsform ist das Stahlteil mit dem Fräserkopf verlötet. Das Verlöten des Fräserkopfes mit dem Stahlteil bietet vorteilhafter Weise eine einfache Möglichkeit diese beiden Bauteile zu verbinden.

Ein weiterer Vorteil der erfindungsgemäßen Fräserkopfeinheit ist, dass hier nur die beiden Verschleißteile, nämlich der Fräserkopf und das Stahlteil miteinander verlötet werden. Dadurch muss der im Allgemeinen sehr haltbare Fräserschaft nicht aufgrund eines angelöteten Verschleißteils bereits nach Ende dessen Nutzungsdauer ausgetauscht bzw. repariert werden.

Gemäß einer weiteren Ausführungsform besteht die Fräserkopfeinheit aus Hartmetall. Dies ist sehr vorteilhaft, da Hartmetall sich durch eine sehr hohe Härte, eine sehr hohe Verschleißfestigkeit und eine hohe Wärmehärte auszeichnet. Damit ist Hartmetall optimal als Material für den Fräserkopf geeignet.

Vorteilhafter Weise weist der Fräserkopf in der Bohrung eine Innenfläche auf, welche orthogonal zur Längsachse der Bohrung angeordnet ist. Ein Vorteil dieser Innenfläche ist, dass an dieser Innenfläche ein Kühlmittelkanal, welcher in einem Fräserschaft verläuft, in die Fräserkopfeinheit weitergeführt werden kann, ohne dass eine Dichtung notwendig ist.

In einem zweiten Aspekt wird die Aufgabe der Erfindung durch den erfindungsgemäßen Fräserschaft gelöst. Der erfindungsgemäße Fräserschaft weist ein Außengewinde, eine stirnseitige Fläche sowie einen zwischen dieser Fläche und dem Außengewinde angeordneten zylinderförmigen Bereich auf, welcher Teil eines Passungssystems ist und der Führung bei einem Zusammenbau des Fräserschafts und der Fräserkopfeinheit dient. Bei dem Zusammenbau des Fräserschafts und der Fräserkopfeinheit kommt die stirnseitige Fläche, getrennt durch einen Luftspalt an der Innenfläche zu liegen. Bei dieser Anordnung kann vorteilhafter Weise auf die aufwendige Herstellung eines Innengewindes im Hartmetall verzichtet werden.

Gemäß einer bevorzugten Ausführungsform besteht der Fräserschaft aus Hartmetall. Hartmetall besitzt eine sehr hohe Härte, so dass es sehr vorteilhaft ist den Fräserschaft aus diesem Material zu fertigen. Des Weiteren ist es sehr vorteilhaft den Fräserschaft komplett aus Hartmetall zu fertigen, da so auf ein zusätzliches Element aus Stahl verzichtet werden kann.

Bevorzugter Weise weist der Fräserschaft mindestens einen Kühlmittelkanal auf. Mittels des Kühlmittelkanals kann vorteilhafter Weise Kühlmittel innerhalb des Fräserschaftes transportiert werden.

Insbesondere führt der mindestens eine Kühlmittelkanal in der Längsrichtung des Fräserschaftes von einem Ende des Fräserschaftes zum anderen Ende des Fräserschaftes und endet in der stirnseitigen Fläche. Ein Vorteil dieser Vorrichtung ist, dass das in dem Kühlmittelkanal transportierte Kühlmittel auf einfache Weise bis zur Fräserkopfeinheit transportiert werden kann.

Der erfindungsgemäße Aufschraubfräser weist eine Fräserkopfeinheit und einen Fräserschaft auf. Ein Vorteil des erfindungsgemäßen Aufschraubfräsers ist, dass die Positionierung der Verbindungsteile, also des Außen- und Innengewindes sowie der Welle und der Bohrung des Passungssystems, gegenüber einem herkömmlichen Aufschraubfräser, ausgetauscht sind. Auf dem sehr harten Fräserschaft ist erfindungsgemäß nur die Passung und das Gewinde geschliffen. Das im Stand der Technik an dieser Stelle befindliche Stahlteil wird gespart. Stattdessen ist erfindungemäß das Stahlteil mit Innengewinde und Bohrung am Fräserkopf angelötet. So werden der Aufwand und die Kosten der Herstellung vorteilhafter Weise reduziert, da auf die aufwendige Herstellung des Innengewindes innerhalb des Hartmetallschaftes verzichtet wird. Des Weiteren ist der erfindungsgemäße Aufschraubfräser auch im Hinblick auf ein Brechen der Lötstelle vorteilhaft. Bei der Anwendung aus dem Stand der Technik wird zwar ebenfalls ein Stahlteil mit Innengewinde und Passung verwendet, allerdings ist dieses am Fräserschaft angelötet. Drehmomentbedingt kann die Lötstelle leichter brechen als in der erfindungsgemäßen Anordnung. Hier befindet sich die Lötstelle nahe der Schneide des Fräserkopfes und somit tritt eine geringere Hebelwirkung auf. Das erfindungsgemäße System ist damit belastbarer als Systeme nach dem Stand der Technik. Die erfindungsgemäße Anordnung ist auch im Fall eines Werkzeugbruchs, also im Falle eines Abbrechens des Fräserkopfes, vorteilhaft. Bei der Anordnung nach dem Stand der Technik könnte das Stück mit dem Außengewinde gegebenenfalls im am Schaft befestigten Stahlteil verbleiben und unter Umständen nicht mehr zu entfernen sein, so dass nicht nur der gebrochene Fräserkopf, sondern auch der gesamte Fräserschaft ausgetauscht bzw. repariert werden müsste. Dies wäre sehr kosten- und zeitintensiv. In der erfindungsgemäßen Anordnung ist ein Abbrechen des Außengewindes mit Passung aufgrund der Härte und Dicke des Fräserschafts unwahrscheinlich. Stattdessen würde eher die Lötstelle zwischen dem Fräserkopf und dem Stahlteil brechen. In einem solchen Fall, könnten Reste des Stahlteils einfach entfernt werden, so dass mit hoher Wahrscheinlichkeit nur das kostengünstigere Werkzeug, in diesem Fall der Fräserkopf, ausgetauscht werden müsste, welches beim Kunden oftmals in größeren Mengen vorhanden ist. So kann vorteilhafter Weise ein teuerer Nachkauf oder eine zeitaufwendige Reparatur durch den Hersteller in den meisten Fällen vermieden werden. Ein weiterer Vorteil des erfindungsgemäßen Aufbaus ist, dass die Innbearbeitung im Hartmetallbereich komplett entfällt und durch eine einfachere Außenbearbeitung des Hartmetalls am Fräserkopf ersetzt wird, beispielsweise durch die Herstellung der konischen Verbindung (des Lötbereichs). Dabei muss die Verbindung nicht konisch sein, sie kann auch andere Formen annehmen. Diese Verbindung muss nicht mehr dem Passungssystem entsprechen und ist dadurch sowohl preiswerter als auch leichter herzustellen.

Insbesondere weist der Aufschraubfräser einen Fräserschaft auf, bei welchem der Kühlmittelkanal von dem Fräserschaft aus weiter in Längsrichtung des Fräserschaftes durch das Stahlteil führt. Auf diese Weise wird vorteilhafter Weise eine im Kühlmittelkanal befindliche Kühlmittelflüssigkeit durch den Fräserschaft und das Stahlteil bis zum Fräserkopf transportiert.

Gemäß einer bevorzugten Ausführungsform wird der Kühlmittelkanal durch das Stahlteil nach außen geführt. Der Vorteil dieses Aufbaus ist, dass sich die Öffnungen des Kühlkanals in dem leicht zu bearbeitenden Stahlteil befinden. Gemäß einer weiteren vorteilhaften Ausführungsform wird der Kühlmittelkanal über den Fräserkopf nach außen geführt. Hierbei gibt es zwei verschiedene Ausführungsformen. Bei der einen Ausführungsform wird der Kühlmittelkanal zentral an der Stirnfläche aus dem Fräserkopf herausgeführt und bei einer weiteren Ausführungsform wird der Kühlmittelkanal an mehreren Stelle jeweils zwischen den Frässchneiden nach außen geführt. Bei diesen beiden Ausführungsformen befinden sich die Öffnungen des Kühlmittelkanals vorteilhafter Weise direkt am Fräserkopf, wo die Kühlmittelflüssigkeit benötigt wird.

### Kurze Beschreibung der Zeichnungen

In den Zeichnungen zeigen:
Fig. 1 a zeigt eine isometrische Darstellung einer Fräserkopfeinheit gemäß einer Ausführungsform der Erfindung,
Fig. 1b zeigt eine Stirnansicht der Fräserkopfeinheit aus Fig. 1 a,
Fig. 1c zeigt eine Schnittansicht der Fräserkopfeinheit aus Fig. 1b, entlang der Achse Ic,
Fig. 2a zeigt eine isometrische Darstellung eines Fräserschaftes gemäß einer Ausführungsform der Erfindung,
Fig. 2b zeigt eine Seitenansicht des Fräserschaftes aus Fig. 2a,
Fig. 2c zeigt eine Schnittansicht des Fräserschaftes aus Fig. 2b, entlang der Achse IIc,
Fig. 3a zeigt eine isometrische Darstellung eines Aufschraubfräsers gemäß einer ersten Ausführungsform der Erfindung,
Fig. 3b zeigt eine Stirnansicht des Aufschraubfräsers aus Fig. 3a,
Fig. 3c zeigt eine Schnittansicht des Aufschraubfräsers aus Fig.3b, entlang der Achse IIIc,
Fig. 4a zeigt eine isometrische Darstellung eines Aufschraubfräsers gemäß einer zweiten Ausführungsform der Erfindung,
Fig. 4b zeigt eine Stirnansicht des Aufschraubfräsers aus Fig. 4a,
Fig. 4c zeigt eine Schnittansicht eines Aufschraubfräsers aus Fig.4b, entlang der Achse IVc,
Fig. 5a zeigt eine isometrische Darstellung eines Aufschraubfräsers gemäß einer dritten Ausführungsform der Erfindung,
Fig. 5b zeigt eine Stirnansicht des Aufschraubfräsers aus Fig. 5a und
Fig. 5c zeigt eine Schnittansicht eines Aufschraubfräsers aus Fig.5b, entlang der Achse Vc.

### Ausführungsbeispiele der Erfindung

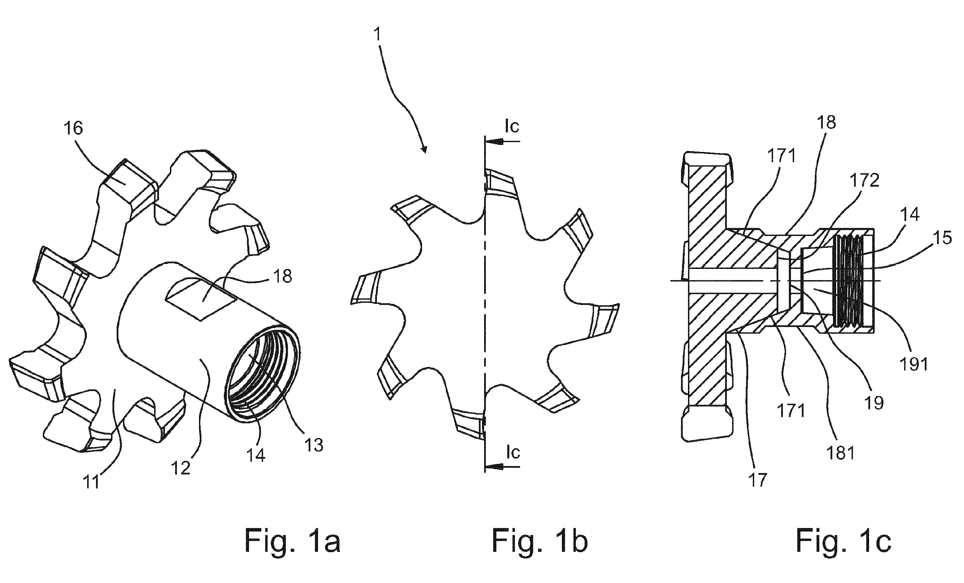

In den Fig. 1a bis 1c ist eine Fräserkopfeinheit 1 gemäß einer Ausführungsform der Erfindung dargestellt. Fig. 1a ist eine isometrische Darstellung der Fräserkopfeinheit 1, Fig. 1b zeigt eine Stirnansicht der Fräserkopfeinheit und Fig. 1c ist eine Schnittansicht entlang der Achse Ic. Die Fräserkopfeinheit 1 weist einen Fräserkopf 11 und ein daran angepasstes kreiszylinderförmiges Stahlteil 12 auf. Das Stahlteil 12 weist eine Bohrung 13 und ein in der Bohrung 13 befindliches Innengewinde 14 auf. In der Bohrung 13 befindet sich eine Innenfläche 15, welche orthogonal zur Längsachse der Bohrung 13 angeordnet ist. Die Innenfläche 15 befindet sich nicht direkt am Ende des Innengewindes 14, sondern in einem gewissen Abstand dazu und zwar in Richtung des Fräserkopfes 11. An dem Fräserkopf 11 befinden sich acht Fräserschneiden 16. In dem hier beschriebenen Ausführungsbeispiel ist der Fräserkopf 11 aus gesintertem Hartmetall gefertigt, welches aus 90 - 94 % Wolframcarbid und 6 - 10 % Cobalt besteht. Auf dem Fräserkopf 11 befindet sich ein konusförmiger Lötbereich 17, welcher zum Anlöten des Stahlteils 12 eingerichtet ist. Dieser Lötbereich 17 ist roh gesintert. In dem hier beschriebenen Ausführungsbeispiel ist das Stahlteil 12 mit dem Fräserkopf 11 verlötet und bildet so die Fräserkopfeinheit 1. Das Stahlteil weist zwei Werkzeugangriffsflächen 18 und 181 auf, welche zum Angreifen eines Werkzeugs an der Fräserkopfeinheit eingerichtet sind. Die Seitenflächen 171 des konusförmigen Lötbereichs 17 liegen an dem Stahlteil 12 an, wobei die Stirnfläche 172 des Lötbereichs 17 nicht direkt an das Stahlteil 12 anschließt, sondern durch einen ersten Luftspalt 19 von dem Stahlteil getrennt ist. In den Fig. 1a bis 1c ist der im Weiteren beschriebene Kühlmittelkanal 23 bzw. dessen Öffnung 24 nicht dargestellt.

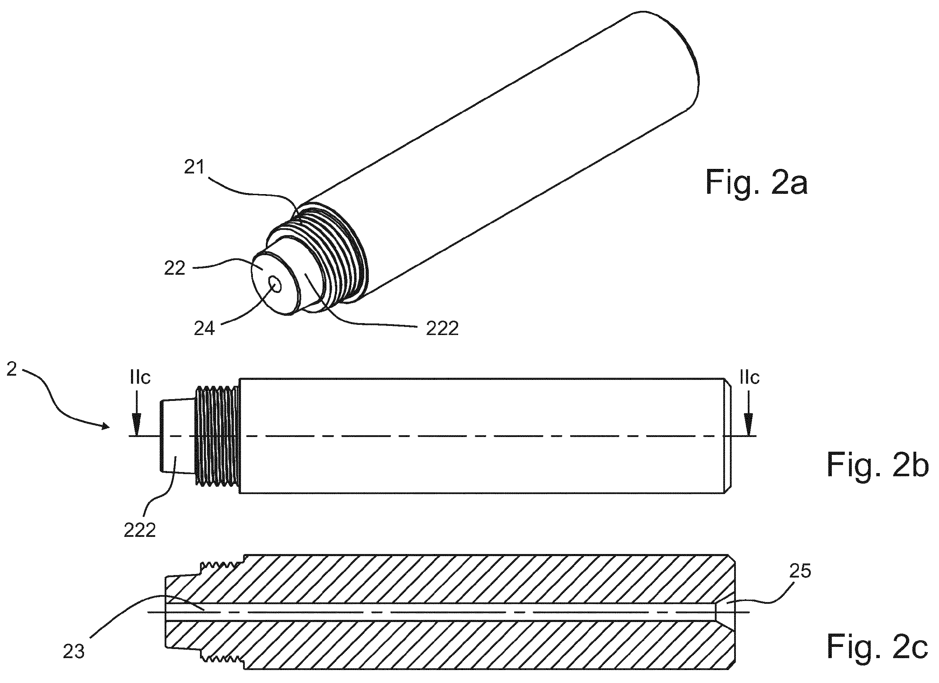

Die Fig. 2a bis 2c zeigen einen Fräserschaft 2 gemäß einer Ausführungsform der Erfindung. Fig. 2a zeigt eine isometrische Darstellung, Fig. 2b zeigt eine Seitenansicht des Fräserschaftes 2 und Fig. 2c zeigt eine Schnittansicht des Fräserschaftes 2 entlang der Achse IIc. Der Fräserschaft 2 ist aus dem gleichen Hartmetall gefertigt wie der Fräserkopf 11 und weist an seinem einen Ende ein Außengewinde 21 sowie eine stirnseitige Fläche 22 auf, wobei das Außengewinde 21 nicht bis direkt zur Fläche 22 heran reicht. An die Fläche 22 anschließend weist der Fräserschaft 2 noch einen zylinderförmigen Bereich 222 auf, welcher dazu eingerichtet ist, als Führung zu dienen, wenn der Fräserschaft 2 und die in Fig. 1a bis 1c gezeigte Fräserkopfeinheit 1 zusammengebaut werden. Bei einem solchen Zusammenbau wird zwischen der Fläche 22 und der Innenfläche 15 der Fräserkopfeinheit 1 noch ein zweiter Luftspalt 191 gebildet. Der Durchmesser des Fräserschaftes 2 ist dabei größer als der Durchmesser des Außengewindes 21. Der Durchmesser des Außengewindes 21 ist wiederum größer als der Durchmesser der stirnseitigen Fläche 22. Der Fräserschaft 2 weist einen Kühlmittelkanal 23 auf, welcher in Längsrichtung, also im Wesentlichen orthogonal zur Fläche 22, von einem Ende des Fräserschafts 2 zum anderen Ende des Fräserschafts 2 führt und in der Fläche 22 endet. In der Fläche 22 befindet sich eine Öffnung 24 des Kühlmittelkanals 23.

An dem der Fläche 22 abgewanden Ende des Kühlmittelkanals 23 verbreitert sich der Kühlmittelkanal 23 zu einer konusförmigen Öffnung 25, welche zur Befüllung des Kühlmittelkanals 23 mit einem Kühlmittel eingerichtet ist.

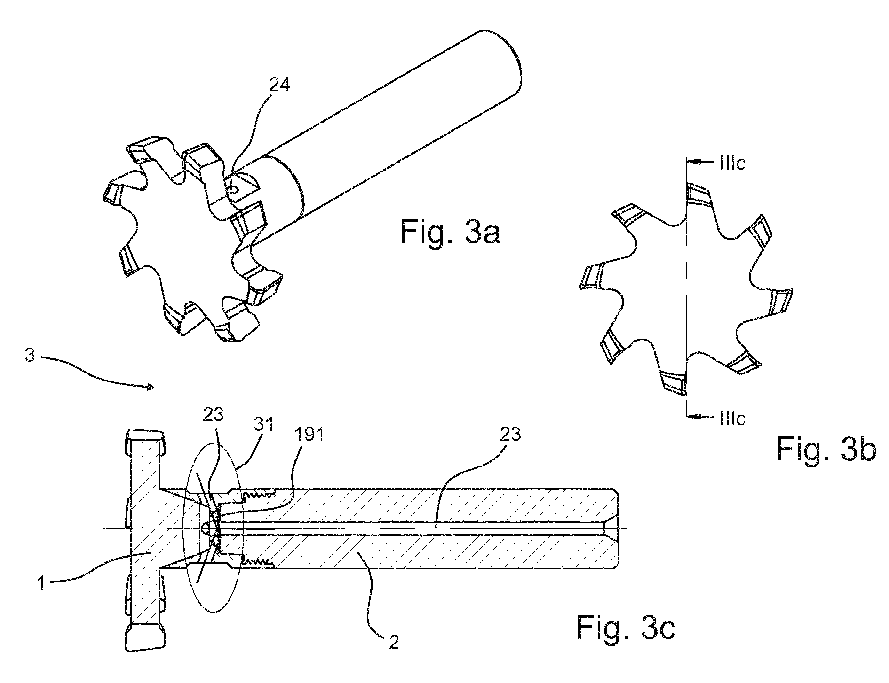

Die Fig. 3a bis 3c zeigen einen Aufschraubfräser 3 gemäß einer ersten Ausführungsform der Erfindung. Fig. 3a ist eine isometrische Darstellung des Aufschraubfräsers 3, 3b ist eine Stirnansicht des Aufschraubfräsers 3 und 3c zeigt eine Schnittansicht des Aufschraubfräsers 3 entlang der Achse IIIc. Der Aufschraubfräser 3 weist eine oben beschriebene und in den Figuren 1 a bis 1 c dargestellte Fräserkopfeinheit 1 sowie einen oben beschriebenen und in den Figuren 2a bis 2c dargestellten Fräserschaft 2 auf. Die Fräserkopfeinheit 1 und der Fräserschaft 2 werden durch Ineinandergreifen des Außengewindes 21 und des Innengewindes 14 miteinander verbunden. In einem Kontaktbereich 31 liegt dabei die Fläche 22 des Fräserschaftes 2, getrennt durch den zweiten Luftspalt 19, an der Innenfläche 15 an. Der Kühlmittelkanal 23 verläuft von dem Fräserschaft 2 aus weiter in Längsrichtung des Fräserschaftes 2 durch das Stahlteil 12. In diesem Ausführungsbeispiel wird der Kühlmittelkanal 23 durch das Stahlteil 12 nach außen geführt. In Fig. 3c ist der Verlauf des Kühlmittelkanals 23 dargestellt und in Fig. 3a ist eine der beiden Öffnungen 24 des Kühlmittelkanals 23 gezeigt.

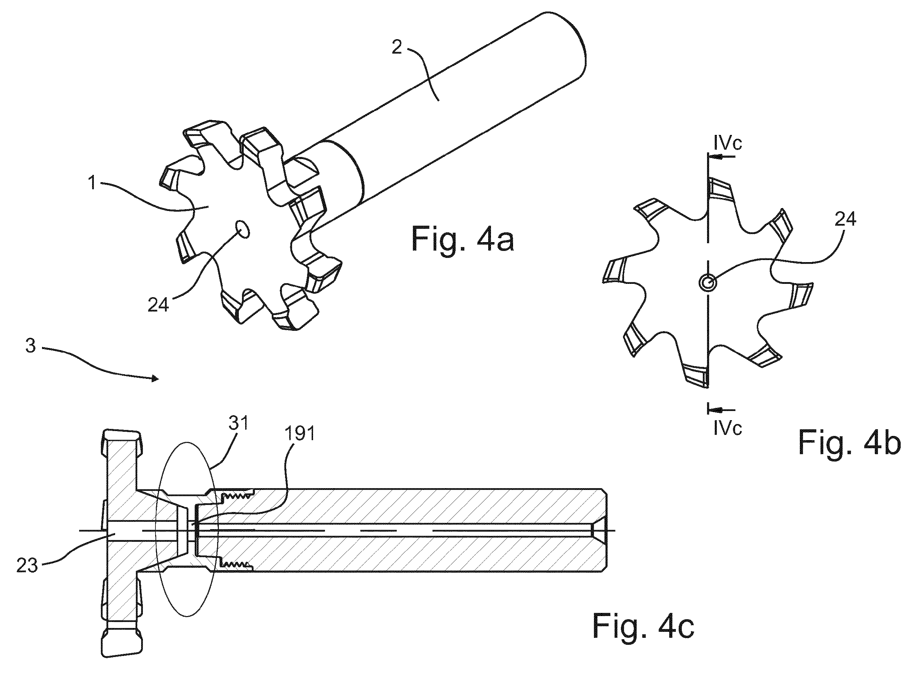

Die Fig. 4a bis 4c zeigen einen Aufschraubfräser 3 gemäß einer zweiten Ausführungsform der Erfindung. Fig. 4a ist eine isometrische Darstellung des Aufschraubfräsers 3, 4b ist eine Stirnansicht des Aufschraubfräsers 3 und 4c zeigt eine Schnittansicht des Aufschraubfräsers 3 entlang der Achse IVc. Der Aufschraubfräser 3 in den Fig. 4a bis 4c unterscheidet sich von dem Aufschraubfräser 3 in Fig. 3a bis 3c nur dadurch, dass bei dem Aufschraubfräser 3 gemäß der zweiten Ausführungsform der Kühlmittelkanal 23 über den Fräserkopf 11 nach außen geführt wird. Dabei wird der Kühlmittelkanal 23 zentral an der Stirnfläche aus dem Fräserkopf herausgeführt. In Fig. 4c ist der Verlauf des Kühlmittelkanals 24 gezeigt und in den Fig. 4a und 4b ist die Öffnung 24 des Kühlmittelkanals dargestellt.

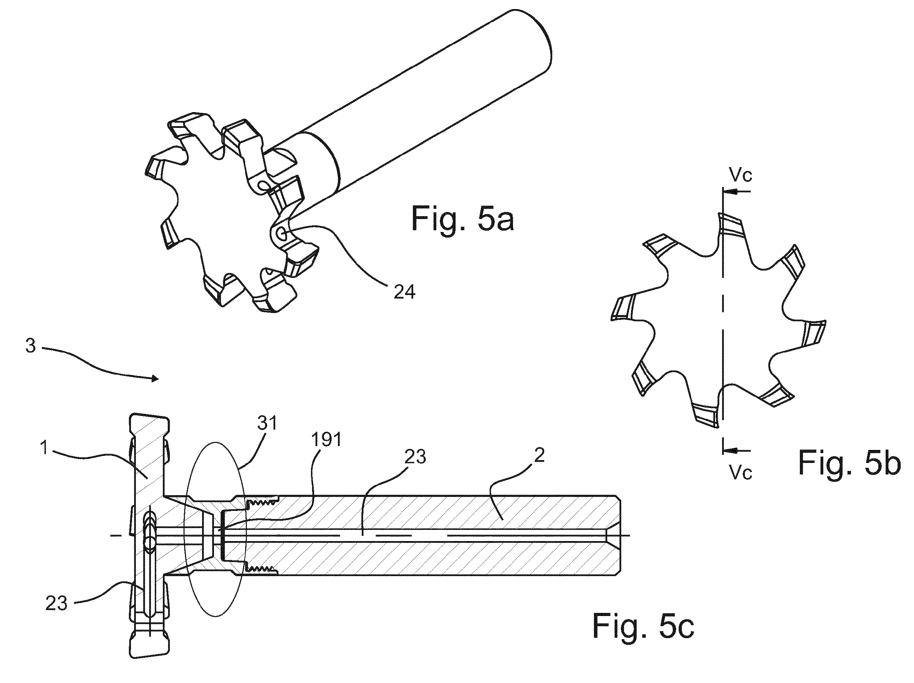

Die Fig. 5a bis 5c zeigen einen Aufschraubfräser 3 gemäß einer dritten Ausführungsform der Erfindung. Fig. 5a ist eine isometrische Darstellung des Aufschraubfräsers 3, 5b ist eine Stirnansicht des Aufschraubfräsers 3 und 5c zeigt eine Schnittansicht des Aufschraubfräsers 3 entlang der Achse Vc. Der Aufschraubfräser 3 in Fig. 5a bis 5c unterscheidet sich von dem Aufschraubfräser 3 in Fig. 3a bis 3c sowie 4a bis 4c nur dadurch, dass bei dem Aufschraubfräser 3 gemäß der dritten Ausführungsform der Kühlmittelkanal 23 innerhalb des Fräserkopfes 11 an mehreren Stelle jeweils zwischen den Fräserschneiden 16 nach außen geführt, so dass sich die Öffnungen 24 des Kühlmittelkanals 23 jeweils zwischen den Fräserschneiden 16 befinden. In Fig. 5c ist der Verlauf des Kühlmittelkanals 23 dargestellt und in Fig. 5a sind einige der Öffnungen 24 gezeigt.

## Patentansprüche

1. Fräserkopfeinheit (1) **dadurch gekennzeichnet, dass** die Fräserkopfeinheit (1) einen Fräserkopf (11) und ein daran angepasstes Stahlteil (12) aufweist, wobei das Stahlteil (12) eine Bohrung (13) und ein in der Bohrung (13) befindliches Innengewinde (14) aufweist.

2. Fräserkopfeinheit (1) nach Anspruch 1, **dadurch gekennzeichnet, dass** der Fräserkopf (11) einen Lötbereich (17) aufweist, welcher zum Anlöten des Stahlteils (12) eingerichtet ist.

3. Fräserkopfeinheit (1) nach Anspruch 2, **dadurch gekennzeichnet, dass** der Lötbereich (17) konusförmig ist.

4. Fräserkopfeinheit (1) nach Anspruch 2 oder 3, **dadurch gekennzeichnet, dass** das Stahlteil (12) mit dem Fräserkopf (11) verlötet ist.

5. Fräserkopfeinheit (1) nach einem der vorhergehenden Ansprüche,
**dadurch gekennzeichnet, dass** der Fräserkopf (11) aus Hartmetall besteht.

6. Fräserkopfeinheit (1) nach einem der vorhergehenden Ansprüche,
**dadurch gekennzeichnet, dass** der Fräserkopf (11) in der Bohrung (13) eine Innenfläche (15) aufweist, welche orthogonal zur Längsachse der Bohrung (13) angeordnet ist.

7. Fräserschaft (2), **dadurch gekennzeichnet, dass** er ein Außengewinde (21), eine stirnseitige Fläche (22) sowie einen zwischen dieser Fläche (22) und dem Außengewinde (21) angeordneten zylinderförmigen Bereich (222) aufweist, welcher der Führung bei einem Zusammenbau des Fräserschafts (2) und einer Fräserkopfeinheit (1) nach Anspruch 1 bis 6 dient.

8. Fräserschaft (3) nach Anspruch 7, **dadurch gekennzeichnet, dass** der Fräserschaft (3) aus Hartmetall besteht.

9. Fräserschaft (2) nach Anspruch 7 oder 8, **dadurch gekennzeichnet, dass** der Fräserschaft (2) mindestens einen Kühlmittelkanal (23) aufweist.

10. Fräserschaft (2) nach Anspruch 9, **dadurch gekennzeichnet, dass** der mindestens eine Kühlmittelkanal (23) in der Längsrichtung des Fräserschaftes (2) von einem Ende des Fräserschaftes (2) zum anderen Ende des Fräserschaftes (2) führt und in der stirnseitigen Fläche (22) endet.

11. Aufschraubfräser (3) aufweisend eine Fräserkopfeinheit (1) nach Anspruch 6 und einen Fräserschaft (2) nach einem der Ansprüche 7 bis 10.

12. Aufschraubfräser (3) nach Anspruch 11, **dadurch gekennzeichnet, dass** er einen Fräserschaft (2) nach Anspruch 9 oder 10 aufweist, wobei der Kühlmittelkanal (23) von dem Fräserschaft (2) aus weiter in Längsrichtung des Fräserschaftes (2) durch das Stahlteil (12) führt.

13. Aufschraubfräser (3) nach Anspruch 12, **dadurch gekennzeichnet, dass** der Kühlmittelkanal (23) durch das Stahlteil (12) nach außen geführt wird.

14. Aufschraubfräser (3) nach Anspruch 12, **dadurch gekennzeichnet, dass** der Kühlmittelkanal (23) über den Fräserkopf (11) nach außen geführt wird.
